# EUROPÄISCHE PATENTSCHRIFT

(11) **EP 1 396 406 B1**
(45) Veröffentlichungstag und Bekanntmachung des Hinweises auf die Patenterteilung: **09.07.2008**
(21) Anmeldenummer: 03019426.0
(22) Anmeldetag: 28.08.2003
(51) Int. Cl.: B60T 17/02, B60T 17/18

(54) **Verfahren zur Erzeugung von Druckluft und Kompressoranordnung zur Durchführung des Verfahrens**
Method of producing compressed air and compressor arrangement for carrying out said method
Procédé pour la production d'air comprimé et disposition de compresseurs permettant la mise en oeuvre dudit procédé

(30) Priorität: 03.09.2002 DE 10240600
(43) Veröffentlichungstag der Anmeldung: 10.03.2004
(73) Patentinhaber: KNORR-BREMSE SYSTEME FÜR NUTZFAHRZEUGE GMBH, 80809 München (DE)
(72) Erfinder: Dörr, Wolfgang, 82223 Eichenau (DE); Gerum, Eduard, 83026 Rosenheim (DE)

(56) Entgegenhaltungen:
- EP-A- 0 165 376
- EP-A- 0 496 958
- DE-C- 720 050
- US-A- 3 819 233

## Beschreibung

Die vorliegende Erfindung betrifft ein Verfahren zur Erzeugung von Druckluft, insbesondere für Nutzfahrzeuge, die über eine mit einem Verbrennungsmotor angetriebenen Verdichtereinheit aus der Umgebungsluft nach Maßgabe einer Steuereinheit erzeugt wird. Daneben betrifft die Erfindung auch eine Kompressoranordnung zur Durchführung des Verfahrens.

Auf dem hier besonders interessierenden Gebiet des Nutzfahrzeugbaus kommen derartige Verfahren bzw. Kompressoranordnungen zur Anwendung, um die Druckluftbeschaffung des bordeigenen Druckluftsystems eines Nutzfahrzeuges auszuführen. Das Druckluftsystem an Bord eines Nutzfahrzeuges wird insbesondere zur Versorgung der Bremsanlage, der Luftfederung, des Anhängers und diverser Nebenverbraucher benötigt. Von der Kompressoranordnung eines Nutzfahrzeuges wird hierfür Druckluft von bis zu 12,5 bar erzeugt.

Aus der Produktinformation "Hochleistungs-Kompressoren" der Firma KNORR-BREMSE Systeme für Nutzfahrzeuge GmbH (Druck-Nr. P-3505-DE01) ist eine Verdichtereinheit bekannt, die nach Art eines Kolbenverdichters ausgebildet ist. Eine in einem Verdichtergehäuse drehend gelagerte Kurbelwelle setzt eine eingangsseitige Drehbewegung mittels des Prinzip eines Kurbeltriebs in eine lineare Hin- und Herbewegung eines zugeordneten, in einem Zylinder untergebrachten Kolbens um, der im Zusammenwirken mit einer im Zylinderdeckel untergebrachten Ventileinrichtung die Umgebungsluft ansaugt und diese anschließend verdichtet abgibt. Die Verdichtereinheit ist in einer ein- oder zweizylindrigen Ausführungsvariante erhältlich. Die einzylindrige Ausführungsvariante besitzt bei einer maximalen Umdrehungszahl von 3.000 U/min eine Förderleistung von ca. 550 l/min. Dagegen ist die zweizylindrige Ausführungsvariante für Druckluftsysteme mit einem relativ hohen Druckluftverbrauch vorgesehen und weist dementsprechend auch eine höhere Förderleistung auf, hier bei einer maximalen Drehzahl von 3.000 U/min eine Förderleistung von circa 1.200 l/min.

Der Antrieb der Verdichtereinheit erfolgt in allgemein bekannter Weise über die Verbrennungskraftmaschine des Nutzfahrzeuges. In einigen Anwendungsfällen ist zwischen der Verbrennungskraftmaschine und der Verdichtereinheit eine drehzahlübersetzende Getriebeeinheit zwischengeschaltet. Die Getriebeeinheit der Verdichtereinheit ist dabei meist direkt in das Fahrzeuggetriebe des Nutzfahrzeuges integriert.

Solche Kompressoranordnungen des Standes der Technik sind außerdem mit technischen Maßnahmen zur Energieeinsparung ausgestattet. So erfolgt der Betrieb der vorstehend beschriebenen, bekannten Kompressoranordnung über eine Steuerung welche die Verdichtereinheit nur dann in Betrieb nimmt, wenn ein Druckluftbedarf im Druckluftsystem des Nutzfahrzeuges besteht. Der Druckluftbedarf wird in den meisten Fällen über einen mit dem Systemdruck in Verbindung stehenden Drucksensor ermittelt. Sinkt der Systemdruck unter einen vorgegebenen Schwellendruck, so wird die Verdichtereinheit in Betrieb genommen, um wieder einen ausreichenden Luftdruck aufzubauen. Zur Speicherung des aufgebauten Drucks werden bei dem Druckluftsystem gewöhnlich ein oder mehrere möglichst großvolumige Druckbehälter eingesetzt.

Eine Bedarfssteuerung für den Betrieb der bekannten Verdichtereinheit erfolgt über ein Umschalten der Verdichtereinheit zwischen einer Förderphase und einer Leerlaufphase. In der Förderphase wird Druckluft aus der Umgebungsluft erzeugt und das Druckluftsystem gespeist. Dem gegenüber läuft die Verdichtereinheit in der Leerlaufphase ohne Last, so dass zwar eine Kolbenbewegung ausgeführt wird, jedoch keine Druckluft in das Druckluftsystem gelangt. Diese wird dann nach außen abgeführt. Da in der Leerlaufphase aufgrund der wegfallenden Last gegenüber der Förderphase sehr viel weniger Leistung durch die Verdichtereinheit aufgenommen wird, trägt diese Art der Luftbedarfssteuerung zur Energieeinsparung bei.

Allerdings ist es von Nachteil, dass die Verdichtereinheit in der Förderphase überwiegend gegen einen Druck von 10 bis 12,5 bar zu arbeiten hat. Insbesondere bei einer einstufigen Verdichtereinheit verursacht dieser hohe Gegendruck eine hohe Leistungsaufnahme. Dagegen benötigen die Druckluftverbraucher des Druckluftsystems unterschiedlich hohe Betriebsdrücke. So erfordert der Betrieb der Bremsanlage einen Luftdruck von 10 bis 12 bar, die Luftfederung benötigt ca. 12 bar und der Anhänger eines Nutzfahrzeuges arbeitet mit einem Luftdruck von 8,5 bar. Bisher wurden diese unterschiedlichen Betriebsdrücke ausgehend von dem Maximaldruck von ca. 12,5 bar - erzeugt von der Verdichtereinheit - durch die Steuereinheit - beispielsweise in Form einer APU(Air Processing Unit) oder einer EAC (Electronic Air Control) - verringert. Dieses Verfahren erweist sich in der Praxis jedoch energetisch als recht uneffektiv.

Dokument DE 0 165 376 A2 offenbart eine Drucklufteinrichtung mit zwei Kreisen mit unterschiedlicher Drücken und zwei separaten Drucklufterzeugern.

Es ist daher die Aufgabe der vorliegenden Erfindung ein Verfahren sowie eine Kompressoranordnung der eingangs beschriebenen Art dahingehend weiter zu verbessern, dass für die Drucklufterzeugung ein geringerer Energieverbrauch erforderlich ist.

Die Aufgabe wird verfahrenstechnisch ausgehend von einem Verfahren gemäß dem Oberbegriff des Anspruchs 1 in Verbindung mit dessen kennzeichnenden Merkmalen gelöst. Hinsichtlich einer Kompressoranordnung zur Durchführung des Verfahrens wird die Aufgabe durch die Merkmale von Anspruch 5 gelöst. Die jeweils rückbezogenen abhängigen Ansprüche geben vorteilhafte Weiterbildungen der Erfindung wieder.

Die Erfindung schließt die technische Lehre ein, dass mit der verbrennungsmotorbetriebenen herkömmlichen Verdichtereinheit nur Druckluft eines niederen Druckniveaus für zugeordnete Niederdruckverbraucher erzeugt wird, wogegen ausgehend von dieser Druckluft des niedrigen Druckniveaus mit Hilfe einer separaten Zusatzverdichtereinheit Druckluft eines höheren Druckniveaus für zugeordnete Hochdruckverbraucher erzeugt wird, wobei die koordinierte Ansteuerung beider Verdichtereinheiten druckbedarfsgesteuert zentral durch die Steuereinheit durchgeführt wird.

Der Vorteil der Erfindung ergibt sich insbesondere daraus, dass die herkömmliche verbrennungsmotorbetriebene Verdichtereinheit nur noch gegen einen Luftdruck von maximal 8,5 bar arbeitet, wodurch die Verdichtereinheit mit weniger Energieverbrauch effektiver betrieben werden kann. Für das dem gegenüber höhere Druckniveau, welches die Hochdruckverbraucher des Druckluftsystems benötigen, wird eine völlig von der verbrennungsmotorbetriebenen Verdichtereinheit getrennte, separate Zusatzverdichtereinheit verwendet. In der Energiebilanz wird der größte Anteil der Energie immer noch durch die verbrennungsmotorbetriebene Verdichtereinheit benötigt; jedoch wird das höhere Druckniveau der in diesem Bereich effektiver zu betreibenden Zusatzverdichtereinheit erzeugt. Gegenüber der verbrennungsmotorbetriebenen Verdichtereinheit braucht die separate Zusatzverdichtereinheit des höheren Druckniveaus nur mit einer dem gegenüber geringeren Einschaltdauer betrieben werden, um den anfallenden Hochdruckbedarf abzudecken. Insgesamt ergibt sich hieraus eine beachtliche Energieeinsparung. Um die beiden Verdichtereinheiten koordiniert anzusteuern, ist eine gemeinsame Steuereinheit vorgesehen, welche bei Druckluftbedarf im niederen Druckniveau oder Druckluftbedarf im höheren Druckniveau die entsprechende Verdichtereinheit ansteuert.

Gemäß einer die Erfindung verbessernden Maßnahme wird die Druckluft des niederen Druckniveaus in einem zugeordneten Niederdruckbehälter und die Druckluft des hohen Druckniveaus in einem zugeordneten Hochdruckbehälter gespeichert. Im Hochdruckbehälter können auch bis zu 20 bar - erzeugt durch die Zusatzverdichtereinheit - bevorratet werden, so dass bei gleichem Behältervolumen zirka die doppelte Energiemenge speicherbar ist. Dieses maximale Druckniveau kann entsprechend des Betriebsdrucks der Druckluftverbraucher angepasst, das heißt verringert werden.

Weiterhin ist es denkbar, dass die Zusatzverdichtereinheit zur Realisierung einer Notfunktion herangezogen werden kann, die darin besteht, dass bei Ausfall der verbrennungsmotorbetriebenen Verdichtereinheit der Druckluftbedarf zumindest vorübergehend durch die Zusatzverdichtereinheit gedeckt wird. Dem entsprechend sollte die separate Zusatzverdichtereinheit nicht durch den Verbrennungsmotor des Nutzfahrzeuges angetrieben werden, sondern durch eine redundante Antriebseinheit. Eine geeignete Antriebseinheit ist beispielsweise ein Elektromotor, der über das elektrische Bordnetz des Nutzfahrzeuges ausreichender Leistung gespeist wird.

Die für die Ansteuerung beider Verdichtereinheiten dienende Steuereinheit des Nutzfahrzeuges steuert die separate Zusatzverdichtereinheit vorzugsweise indirekt durch An- und Ausschalten des vorgeschalteten Elektromotors an. Zur Drehzahlanpassung ist es denkbar, zwischen dem Elektromotor und der Zusatzverdichtereinheit ein geeignetes Getriebe vorzusehen. Vorzugsweise bildet die Zusatzverdichtereinheit samt Elektromotor und gegebenenfalls mit Getriebeeinheit ein einziges Systemmodul, welches lösbar an geeigneter Stelle am Nutzfahrzeug montierbar ist.

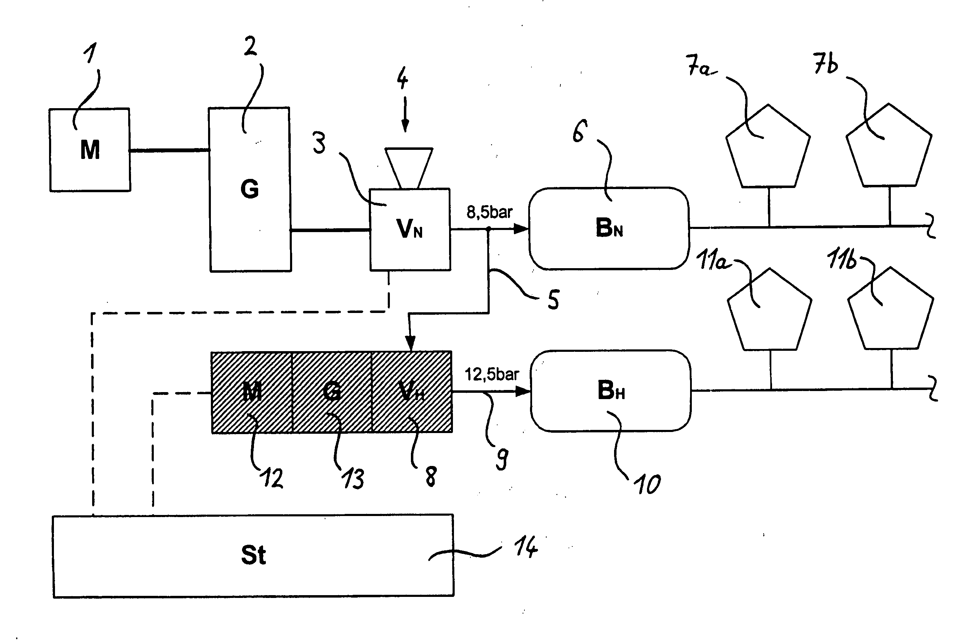

Weitere die Erfindung verbessernde Maßnahmen werden nachstehend gemeinsam mit der Beschreibung eines bevorzugten Ausführungsbeispiels der Erfindung anhand der Figur näher dargestellt. Die einzige Figur zeigt ein schematisches Blockschaltbild einer Kompressoranordnung, die zur Ausführung des erfindungsgemäßen Verfahrens vorgesehen ist.

Die Kompressoranordnung besteht im Wesentlichen aus einem Verbrennungsmotor 1 zur Erzeugung einer Drehbewegung, welche einer nachgeschalteten Getriebeeinheit 2 zugeführt wird, um die Drehzahl des Verbrennungsmotors 1 entsprechend der zulässigen Drehzahl für eine nachgeschaltete Verdichtereinheit 3 anzupassen. Die Getriebeeinheit 2 arbeitet insoweit als Untersetzungsgetriebe und ist nach Art eines Stirnradgetriebes ausgebildet. Die abtriebsseitig der Getriebeeinheit 2 vorgesehene Verdichtereinheit 3 nutzt die eingangsseitige Drehbewegung in herkömmlicher Weise zur Erzeugung von Druckluft aus der Umgebungsluft 4. Die Verdichtereinheit 3 ist in diesem Ausführungsbeispiel als an sich bekannter einzylindriger Kolbenverdichter ausgebildet. Die von der Verdichtereinheit 3 erzeugte Druckluft von 8,5 bar wird ausgangsseitig über eine Druckluftleitung 5 einem Druckluftbehälter 6 zugeführt. Der Druckluftbehälter 6 dient dabei zur Speicherung dieser Druckluft des niederen Druckniveaus. Am Niederdruckbehälter 6 sind diverse Niederdruckverbraucher 7a, 7b des Nutzfahrzeuges angeschlossen.

Daneben gelangt die von der verbrennungsmotorbetriebenen Verdichtereinheit 3 erzeugte Druckluft des niederen Druckniveaus auch in eine weitere Zusatzverdichtereinheit 8. Die Zusatzverdichtereinheit 8 komprimiert die Druckluft auf ein höheres Druckniveau von hier 12,5 bar. Ausgangsseitig der Zusatzverdichtereinheit 8 gelangt die Druckluft des hohen Druckniveaus über eine Druckluftleitung 9 zu einem Hochdruckbehälter 10. Am Hochdruckbehälter 10 sind diverse Hochdruckverbraucher 11a, 11b usw. angeordnet.

Die nur zur Erzeugung des höheren Druckniveaus vorgesehene Zusatzverdichtereinheit 8 wird von einem Elektromotor 12 angetrieben. Zwischen dem Elektromotor 12 und der Zusatzverdichtereinheit 8 ist hier eine Getriebeeinheit 13 vorgesehen. Vorzugsweise ist der Motor 12 mit der Getriebeeinheit 13 als eine Komponente nach Art eines Getriebemotors ausgeführt, welcher an die Zusatzverdichtereinheit 8 angeflanscht ist, um ein einziges Systemmodul zu bilden.

Zur koordinierten Ansteuerung der verbrennungsmotorbetriebenen Verdichtereinheit 3 sowie der Zusatzverdichtereinheit 8 ist eine Steuereinheit 14 vorgesehen, welche je nach Druckluftbedarf die verbrennungsmotorbetriebene Verdichtereinheit 3 und/oder die Zusatzverdichtereinheit 8 in Betrieb nimmt. Die Inbetriebnahme der separaten Zusatzverdichtereinheit 8 erfolgt hier indirekt durch An- und Ausschalten des vorgeschalteten Elektromotors 12. Dagegen ist die verbrennungsmotorbetriebene Verdichtereinheit 3 in diesem Ausführungsbeispiel zwischen einem Leerlauf- und einem Lastbetrieb in herkömmlicher Weise umschaltbar, wobei ein permanenter Drehantrieb bei laufendem Verbrennungsmotor 1 erfolgt. Die Steuereinheit 14 realisiert weiterhin eine Notfunktion, in dem die elektromotorisch betriebene Zusatzverdichtereinheit 8, welche durch das elektrische Bordnetz des Nutzfahrzeuges gespeist ist, bei Ausfall der verbrennungsmotorbetriebenen Verdichtereinheit 3 in Betrieb genommen wird. Diese Notfunktion wird nur vorübergehend aufrechterhalten, um sicherheitsrelevante Druckverbraucher - wie Bremsen - mit Druckluft zu versorgen.

Die Erfindung ist nicht beschränkt auf das vorstehend beschriebene bevorzugte Ausführungsbeispiel. Es sind vielmehr auch Abwandlungen hiervon denkbar, die vom Schutzbereich der nachfolgenden Ansprüche umfasst sind. So ist es beispielsweise auch möglich, dass die Zusatzverdichtereinheit örtlich getrennt von der verbrennungsmotorbetriebenen Verdichtereinheit im Anhänger eines Nutzfahrzeuges montiert ist, um hier ein höheres Druckniveau für zugeordnete lokale Hochdruckverbraucher zu erzeugen. Hieraus ergeben sich weitere Vorteile, wie eine Verkleinerung von Bremskomponenten, Druckbehältern, Federbälge für die Luftfederung und dergleichen.

### Bezugszeichenliste

- **1**: Verbrennungsmotor
- **2**: Getriebeeinheit
- **3**: Verdichtereinheit
- **4**: Umgebungsluft
- **5**: Druckluftleitung
- **6**: Niederdruckbehälter
- **7**: Niedrigdruckverbraucher
- **8**: Zusatzverdichtereinheit
- **9**: Druckluftleitung
- **10**: Hochdruckbehälter
- **11**: Hochdruckverbraucher
- **12**: Elektromotor
- **13**: Getriebeeinheit
- **14**: Steuereinheit

## Patentansprüche

1. Verfahren zur Erzeugung von Druckluft, insbesondere für Nutzfahrzeuge, die über eine mit einem Verbrennungsmotor (1) angetriebenen Verdichtereinheit (3) aus der Umgebungsluft nach Maßgabe einer Steuereinheit (14) erzeugt wird,
**dadurch gekennzeichnet, dass** mit der verbrennungsmotorbetriebenen Verdichtereinheit (3) Druckluft eines nur niederen Druckniveaus für zugeordnete Niederdruckverbraucher (7a, 7b) erzeugt wird, und dass ausgehend von der Druckluft des niederen Druckniveaus mit einer separaten Zusatzverdichtereinheit (8) Druckluft eines höheren Druckniveaus für zugeordnete Hochdruckverbraucher (11a, 11b) erzeugt wird, wobei die koordinierte Ansteuerung beider Verdichtereinheiten (3, 8) druckbedarfsgesteuert zentral durch die Steuereinheit (14) durchgeführt wird.

2. Verfahren nach Anspruch 1,
**dadurch gekennzeichnet, dass** die Druckluft des niederen Druckniveaus in einem zugeordneten Niedrigdruckbehälter (6) und die Druckluft des hohen Druckniveaus in einem zugeordneten Hochdruckbehälter (10) gespeichert wird.

3. Verfahren nach Anspruch 1 oder 2,
**dadurch gekennzeichnet, dass** bei Ausfall der verbrennungsmotorbetriebenen Verdichtereinheit (3) der Druckluftbedarf im Umfang einer Notfunktion zumindest vorübergehend durch die Zusatzverdichtereinheit (8) gedeckt wird.

4. Verfahren nach einem der Ansprüche 1 bis 3,
**dadurch gekennzeichnet, dass** die separate Zusatzverdichtereinheit (8) elektrisch angetrieben wird.

5. Kompressoranordnung, insbesondere für Nutzfahrzeuge, mit einem Verbrennungsmotor (1) zur Erzeugung einer Drehbewegung, der eine nachgeschaltete Verdichtereinheit (3) zur Erzeugung von Druckluft aus der Umgebungsluft antreibt, wobei eine Steuereinheit (14) die Drucklufterzeugung bei Druckluftbedarf auslöst,
**dadurch gekennzeichnet, dass** die verbrennungsmotorbetriebene Verdichtereinheit (3) Druckluft eines nur niederen Druckniveaus für zugeordnete Niederdruckverbraucher (7a, 7b) erzeugt, und dass ausgehend von der Druckluft des niederen Druckniveaus eine separate Zusatzverdichtereinheit (8) Druckluft eines höheren Druckniveaus für zugeordnete Hochdruckverbraucher (11a, 11b) erzeugt, wobei zur koordinierten, druckbedarfsgesteuerten Ansteuerung beider Verdichtereinheiten (3, 8) die Steuereinheit (14) vorgesehen ist.

6. Kompressoranordnung nach Anspruch 5,
**dadurch gekennzeichnet, dass** die Druckluft des niederen Druckniveaus ein zugeordneter Niedrigdruckbehälter (6) und die Druckluft des hohen Druckniveaus ein zugeordneter Hochdruckbehälter (10) speichert.

7. Kompressoranordnung nach Anspruch 5 oder 6,
**dadurch gekennzeichnet, dass** die Zusatzverdichtereinheit (8) bei Ausfall der verbrennungsmotorbetriebenen Verdichtereinheit (3) den Druckluftbedarf im Umfang einer Notfunktion nach Maßgabe der Steuereinheit (14) zumindest teilweise deckt.

8. Kompressoranordnung nach einem der Ansprüche 5 bis 7,
**dadurch gekennzeichnet, dass** die Steuereinheit (14) die separate Zusatzverdichtereinheit (8) indirekt durch An- und Ausschalten eines vorgeschalteten Elektromotors (12) ansteuert.

9. Kompressoranordnung nach Anspruch 8,
**dadurch gekennzeichnet, dass** die elektromotorisch betriebene Zusatzverdichtereinheit (8) nach Art einer einstufigen Verdichtereinheit ausgebildet ist.

10. Kompressoranordnung nach Anspruch 5,
**dadurch gekennzeichnet, dass** die verbrennungsmotorbetriebene Verdichtereinheit (3) nach Art einer ein- oder zweistufigen Verdichtereinheit ausgebildet ist.

## Claims

1. Method of generating compressed air, in particular for commercial vehicles, which is generated from the ambient air via a compressor unit (3) operated by an internal combustion engine (1) under control of a controller unit (14),
**characterised in that** said compressor unit (3) operated by an internal combustion engine (3) serves to generate compressed air at a low pressure level only for associated pneumatic low-pressure devices (7a, 7b), and that, starting out from the compressed air at said low pressure level, compressed air at a higher pressure level for associated pneumatic high-pressure devices (11a, 11 b) is generated by means of a separate additional compressor unit (8), with the coordinated control of both compressor units (3, 8) being centrally controlled by said controller unit (14) as a function of the pressure demand.

2. Method according to Claim 1,
**characterised in that** the compressed air at said low pressure level is stored in an associated low-pressure tank (6) while the compressed air at said high pressure level is stored in an associated high-pressure tank (10).

3. Method according to Claim 1 or 2,
**characterised in that** in the case of failure of said compressor unit (3) operated by an internal combustion engine, the demand for compressed air is covered to the extent of an emergency function, at least temporarily, by said additional compressor unit (8).

4. Method according to any of the Claims 1 to 3,
**characterised in that** said separate additional compressor unit (8) is electrically operated.

5. Compressor system, in particular for commercial vehicles, comprising an internal combustion engine (1) for generating a rotary motion, which drives a downstream compressor unit (3) for generating compressed air from the ambient air, wherein a controller unit (14) triggers the generation of compressed air in the event of a compressed-air demand,
**characterised in that** said compressor unit (3) operated by an internal combustion engine generates compressed air at a low pressure level only for associated pneumatic low-pressure devices (7a, 7b), and that, starting out from the compressed air at said low pressure level, compressed air at a higher pressure level for associated pneumatic high-pressure devices (11 a, 11 b) is generated by means of a separate additional compressor unit (8), with a controller unit (14) being provided for the coordinated control of both compressor units (3, 8) as a function of the pressure demand

6. Compressor system according to Claim 5,
**characterised in that** an associated low-pressure tank (6) stores the compressed air at said low pressure level while an associated high-pressure tank (10) stores the compressed air at said high pressure level.

7. Compressor system according to Claim 5 or 6,
**characterised in that** in the case of failure of said compressor unit (3) operated by an internal combustion engine, said additional compressor unit (8) covers the demand for compressed air to the extent of an emergency function, at least temporarily, in response to the control by said controller unit (14).

8. Compressor system according to any of the Claims 5 to 7,
**characterised in that** said controller unit (14) controls said separate additional compressor unit (8) indirectly by activation and deactivation of an upstream electric motor (12).

9. Compressor system according to Claim 8,
**characterised in that** said electrically operated additional compressor unit (8) is configured in the form of a single-stage compressor unit.

10. Compressor system according to Claim 5,
**characterised in that** said compressor unit (3) operated by an internal combustion engine is configured in the form of a single-stage or dual-stage compressor unit.

## Revendications

1. Procédé à produire de l'air comprimé, en particulier pour des véhicules utilitaires, qui est produit de l'air ambiant via une unité à compresseur (3) actionnée par un moteur à combustion interne (1) sous la commande par une unité de commande (14),
**caractérisé en ce que** ladite unité à compresseur (3) actionnée par un moteur à combustion interne (3) sert à ne produire de l'air comprimé qu'à un bas niveau de pression pour des dispositif pneumatiques à basse pression y affectés (7a, 7b), et **en ce que**, départant de l'air comprimé à un bas niveau de pression, de l'air comprimé à un niveau de pression plus haut pour des dispositifs pneumatiques à haute pression y affectés (11 a, 11 b) est produit moyennant une unité à compression supplémentaire séparée (8), à commande coordonnée des deux unités à compresseur (3, 8) étant commandée de manière centralisée par ladite unité de commande (14) en fonction des besoins de pression.

2. Procédé selon la revendication 1,
**caractérisé en ce que** l'air comprimé audit bas niveau de pression est accumulé dans un accumulateur à bas pression y affecté (6), pendant que l'air comprimé audit haut niveau de pression est accumulé dans un accumulateur à haute pression (10) y affecté.

3. Procédé selon la revendication 1 ou 2,
**caractérisé en ce que**, au cas de défaillance de ladite unité à compresseur (3) actionnée par un moteur à combustion interne, les besoins de l'air comprimé sont couvert dans la mesure d'une fonction d'urgence, au moins pour une période transitoire, par ladite unité à compresseur supplémentaire (8).

4. Procédé selon une quelconque des revendications 1 à 3,
**caractérisé en ce que** ladite unité à compresseur séparée supplémentaire (8) est activée en mode électrique.

5. Système à compresseur, en particulier pour des véhicules utilitaires, comprenant un moteur à combustion interne (1) à engendrer un mouvement rotatif, qui commande une unité à compresseur (3) en aval afin de produire de l'air comprimé de l'air ambiant, dans lequel une unité de commande (14) enclenche la production de l'air comprimé au cas des besoins de l'air comprimé,
**caractérisé en ce que** ladite unité à compresseur (3) actionnée par un moteur à combustion interne ne produit de l'air comprimé qu'à un bas niveau de pression pour des dispositif pneumatiques à basse pression y affectés (7a, 7b), et **en ce que**, départant de l'air comprimé à un bas niveau de pression, de l'air comprimé à un niveau de pression plus haut pour des dispositifs pneumatiques à haute pression y affectés (11a, 11b) est produit moyennant une unité à compression supplémentaire séparée (8), à une unité de commande (14) étant disposée pour la commande coordonnée desdites deux unités à compresseur (3, 8) en fonction des besoins de pression

6. Système à compresseur selon la revendication 5,
**caractérisé en ce qu'**un accumulateur à bas pression (6) y affecté accumule de l'air comprimé audit bas niveau de pression, pendant qu'un accumulateur à haute pression (10) y affecté accumule de l'air comprimé audit haut niveau de pression.

7. Système à compresseur selon la revendication 5 ou 6,
**caractérisé en ce que**, au cas de défaillance de ladite unité à compresseur (3) actionnée par un moteur à combustion interne, ladite unité à compresseur (8) supplémentaire couvre les besoins de l'air comprimé dans la mesure d'une fonction d'urgence, au moins pour une période transitoire, en réponse à la commande par ladite unité de commande (14).

8. Système à compresseur selon une quelconque des revendications 5 à 7,
**caractérisé en ce que** ladite unité de commande (14) commande ladite unité à compresseur séparée supplémentaire (8) indirectement par l'activation et la désactivation d'un moteur électrique en amont (12).

9. Système à compresseur selon la revendication 8,
**caractérisé en ce que** ladite unité à compresseur (8) supplémentaire, commandée en mode électrique, est configurée sous forme d'une unité à compresseur à un seul étage.

10. Système à compresseur selon la revendication 5,
**caractérisé en ce que** ladite unité à compresseur (3) actionnée par un moteur à combustion interne est configurée sous forme d'une unité à compresseur à un seul étage ou à deux étages.
